# DEMANDE DE BREVET EUROPEEN

(11) **EP 1 452 426 A1**
(43) Date de publication de la demande: **01.09.2004**
(21) Numéro de dépôt: 04290415.1
(22) Date de dépôt: 20.02.2004
(51) Int. Cl.: B62D 29/04, B62D 25/08

(54) **Pièce de carrosserie de véhicule automobile présentant un aspect de profondeur marqué**

(30) Priorité: 29.11.2001 FR 0115461
(62) Demande divisionnaire de: 02292944.2
(71) Demandeur: COMPAGNIE PLASTIC OMNIUM, 69007 Lyon (FR)
(72) Inventeur: Pommeret, Maelig, 69003 Lyon (FR); Thevenet, Charlotte, 01580 Izernore (FR); Fayt, Arnold, 39240 Aromas (FR); Lacroix, Thibault, 01500 Chateau-Gaillard (FR)
(74) Mandataire: de la Bigne, Guillaume Michel Marie

(57) **Abrégé**

Pièce de carrosserie (4, 5, 11) de véhicule automobile comportant une face extérieure dirigée vers l'extérieur du véhicule et une face intérieure opposée à la face extérieure, caractérisée en ce qu'elle est constituée par une peau réalisée en une matière laissant passer la lumière, recouverte au moins partiellement par un revêtement opaque sur sa face intérieure.

## Description

La présente invention concerne une pièce de carrosserie de véhicule automobile présentant un aspect de profondeur marqué. En particulier, l'invention concerne un bandeau de carrosserie.

On sait que l'esthétique est un critère de plus en plus important pour le consommateur au moment du choix de son véhicule.

C'est la raison pour laquelle l'industrie automobile consacre d'importants efforts au développement de pièces de carrosserie ayant un aspect aussi parfait et durable que possible, afin qu'il s'en dégage une impression de qualité qui bénéficie à l'ensemble du véhicule, y compris dans ses aspects purement fonctionnels et indépendants de l'esthétique.

On s'attache ainsi non seulement à la couleur de la peinture, mais aussi par exemple à sa tenue dans le temps et sous toutes conditions météorologiques ou aux raccords de teintes entre pièces peintes en ligne et pièces peintes hors lignes et rapportées sur le châssis.

Dans ce contexte, il est connu notamment que les peintures exercent d'autant plus d'attraction sur le consommateur qu'elles présentent de la profondeur. En effet, les peintures métallisées et les vernis sont traditionnellement considérés comme rendant les aspects les plus cossus. Ils sont d'ailleurs souvent associés à des modèles de véhicule haut de gamme.

Des progrès très importants ont été accomplis dans le domaine des peintures appliquées aux pièces de carrosserie, mais toujours en partant du principe que la couche de peinture est présente sur la face de la pièce peinte se trouvant à l'extérieur du véhicule.

Il en résulte certaines limitations que la présente invention cherche à dépasser.

La présente invention a pour objet une pièce de carrosserie de véhicule automobile comportant une face extérieure dirigée vers l'extérieur du véhicule et une face intérieure opposée à la face extérieure, ladite pièce de carrosserie étant caractérisée en ce qu'elle est constituée par une peau réalisée en une matière laissant passer la lumière, recouverte au moins partiellement par un revêtement opaque sur sa face intérieure.

Selon l'invention, on entend par « matière laissant passer la lumière » une matière transparente ou translucide.

Grâce à l'invention, la couche de revêtement opaque est protégée des rayures, des projections et des chocs auxquels une pièce de carrosserie est habituellement soumise.

La protection agit également à l'égard des agressions chimiques, auxquelles la peau peut mieux résister que le revêtement.

De même, en utilisant une matière plastique laissant passer la lumière mais filtrant les ultraviolets, le revêtement bénéficie d'une protection à l'exposition aux UV, ce qui permet d'utiliser par exemple comme revêtement une peinture ne résistant pas à ces rayons.

La protection fournie par la peau de la pièce de carrosserie s'avère être un avantage considérable de l'invention, car elle ouvre un large choix de matières pouvant constituer des revêtements, parmi lesquels des matières auxquelles l'homme du métier avait renoncé dans un usage de pièces de carrosserie en raison de leur fragilité. Ainsi, on peut mentionner, sans que cette liste ne soit exhaustive :
- des couches métalliques formées par dépôt,
- des revêtement habituellement utilisés pour l'habitacle, tels que des tissus, ce qui confère au véhicule une cohérence esthétique entre son intérieur et son extérieur,
- des films électroluminescents, trop fragiles pour être exposés aux agressions mécaniques à l'extérieur du véhicule et cependant utiles pour réaliser des fonctions de signalisation en complément des optiques proprement dits,
- des peintures phosphorescentes, au rendu esthétique innovant,
- des matières chargées de fibres naturelles, qui apportent une connotation écologique.

En dehors de ces revêtements fragiles, des revêtement plus conventionnels peuvent bien entendu être utilisé, comme des peintures ou des matières plastiques rapportées ou surmoulées, par exemple sous forme de films.

Pour associer la peau de la pièce selon l'invention au revêtement, tous procédés peuvent être envisagés, le choix du procédé le plus approprié étant à la portée de l'homme du métier en fonction de la nature du revêtement.

Cependant, il est préférable que la technique retenue garantisse un contact entre la peau et le revêtement assez intime pour que l'interface entre eux n'empêche pas de voir le revêtement.

Ainsi, on peut mettre en oeuvre aussi bien la technique de dépôt de matière, par exemple la peinture, que celle de surmoulage de matière, que l'insert surmoulé formant le revêtement soit un insert chaud ou un insert froid.

On entend par insert chaud un insert en matière plastique que l'on surmoule dès sa sortie d'une précédente empreinte dans laquelle il vient d'être formé, avant même de se refroidir. Cette technique de surmoulage d'insert chaud est quelquefois désignée surmoulage rotatif en raison du mouvement de rotation que fait l'outil de préhension qui fait passer l'insert de sa première empreinte à l'empreinte de surmoulage.

L'insert froid est une pièce que l'on place dans le moule bien après l'avoir fabriquée, comme par exemple un film obtenu par extrusion de matière, qui est éventuellement thermoformé à la forme de l'empreinte de surmoulage.

Une autre technique acceptable, si le revêtement s'y prête, est l'apport du revêtement sur la peau après fabrication de celle-ci. Dans ce cas, une soudure ou un collage avec une colle transparente seront indiqués.

Dans le cas d'un revêtement peint, il est remarquable que la pièce selon l'invention fournit un aspect de profondeur très marqué qu'aucune peinture, appliquée de manière traditionnelle, ne peut rendre, compte tenu de sa finesse.

Grâce à l'invention, on peut obtenir des effets nouveaux, dont quelques exemples vont maintenant être décrits.

Tout d'abord, on peut former un motif en relief sur la face intérieure de la peau. Ce motif peut modifier la transparence de la peau et/ou générer des déformations des rayons lumineux qui modifient localement la luminosité du revêtement.

De même, avec une peau translucide, combinée à une peinture métallisée, on peut obtenir un aspect nacré.

Un autre rendu intéressant est obtenu en partant d'une matière translucide que l'on moule dans une empreinte qui présente par endroits un état de surface poli glace, c'est-à-dire extrêmement lisse. Dans ce cas, la peau devient transparente aux endroits correspondant aux zones lisses de l'empreinte. Au besoin, on peut combiner à l'effet des zones lisses un amincissement local de la peau, qui contribue à améliorer davantage sa transparence. La peau ainsi obtenue présente alors des zones transparentes intégrées dans un ensemble translucide.

On peut encore prévoir un grainage de la face externe de la peau, ce qui apporte un flou tout en rendant la pièce moins sujette aux rayures.

Bien entendu, les variantes envisagées ci-dessus peuvent se combiner entre elles.

Il est remarquable que la pièce de carrosserie selon l'invention peut être obtenue sans mettre en oeuvre aucune opération supplémentaire par rapport à une fabrication de pièce de carrosserie en matière plastique conventionnelle.

En effet, si l'on considère par exemple une pièce peinte, on moule d'abord la pièce, puis on la peint, les seules différences étant que la matière plastique moulée est une matière laissant passer la lumière, par exemple du copolymère translucide, et que la peinture de la pièce est appliquée sur sa face interne et non sur sa face externe.

De même, si l'on considère une pièce revêtue d'un film surmoulé, on place le film dans l'empreinte du moule et on y introduit la matière plastique, les seules différences portant sur la matière, qui laisse passer la lumière, et sur la position du film dans l'empreinte.

D'une manière générale, on peut considérer que la similitude de fabrication d'une pièce selon l'invention et de son équivalent selon l'état de la technique a pour conséquence, en termes économiques, que la pièce selon l'invention a une prix de revient, hors coût de la matière, tout à fait comparable à celui d'une pièce en matière plastique de l'état de la technique.

Dans un premier mode de réalisation, le revêtement recouvre intégralement la face interne de la peau.

Dans un second mode de réalisation, le revêtement ne recouvre que partiellement la face interne de la peau et laisse découvertes certaines zones de ladite face interne. Ces zones peuvent être utilisées pour placer derrière la pièce de carrosserie des éléments optiques, tels que des projecteurs, qui utilisent la propriété transparente ou translucide de la pièce de carrosserie. On peut également utiliser ces zones pour placer des capteurs, par exemple optiques ou capacitif, derrière la pièce de carrosserie.

Il est avantageux que ces zones découvertes coïncident avec des zones transparentes obtenues à l'aide d'une empreinte partiellement polie glace, comme précédemment expliqué.

La présente invention a en particulier pour objet un bandeau de carrosserie destiné à s'appliquer sur la face externe d'une autre pièce de carrosserie, qui est caractérisé en ce qu'il est une pièce de carrosserie telle que décrite ci-dessus.

Afin de faciliter la compréhension de l'invention, on va maintenant en décrire des modes de réalisation donnés à titre d'exemples non limitatifs à l'aide des dessins annexés dans lesquels :
- la figure 1 représente l'avant d'un véhicule automobile,
- la figure 2 représente une des pièces de carrosserie du véhicule de la figure 1,
- la figure 3 représente le bandeau du véhicule de la figure 1,
- la figure 4 est une vue du détail IV de la figure 1,
- la figure 5 est une perspective d'une partie d'un autre bandeau de carrosserie, et
- la figure 6 représente le bandeau de carrosserie de la figure 5, vu de l'intérieur.

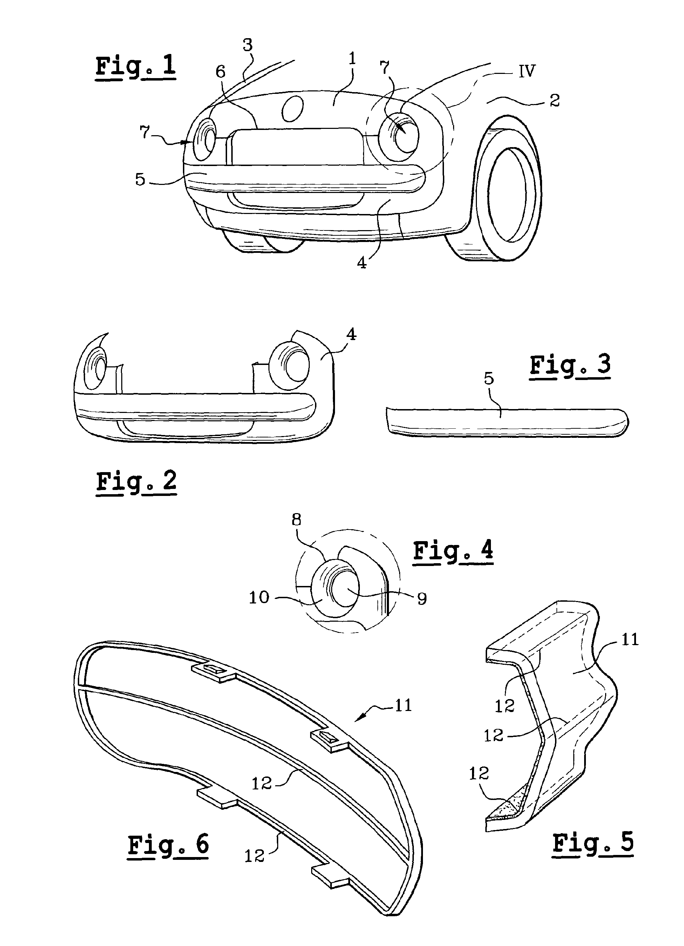

Le véhicule représenté à la figure 1 comporte une carrosserie qui se décompose à l'avant en un capot plongeant 1, des ailes latérales 2 et 3, une face avant 4.

La face avant 4 supporte en outre un bandeau 5 qui, au moins esthétiquement, rappelle une peau de pare-chocs conventionnelle.

Une grille de calandre 6 complète l'avant du véhicule, en étant délimitée par le capot 1 et la face avant 4. Le bandeau 5 masque partiellement cette grille 6.

Dans l'exemple décrit, la face avant 4 et le bandeau 5 sont constitués par une peau réalisée en polypropylène copolymère tel que la matière commercialisée sous la marque Clyrell de la société Basell, qui est une matière plastique translucide.

La face externe de ces pièces est laissée non peinte tandis que leurs faces internes (non visibles sur les figures 1 à 4) sont recouvertes d'une peinture métallisée.

Il en résulte l'aspect nacré précédemment mentionné.

De plus, le bandeau 5 présente un grainage sur sa face externe, ce qui rend un aspect flou intéressant du point de vue strictement esthétique mais également du point de vue technique, car les dégradations de surface du bandeau résultant de son contact avec des objets extérieurs, occasionnant notamment des rayures, sont ainsi moins visibles.

Alors que le bandeau 5 est intégralement peint sur sa face interne, la face avant 4 comporte deux zones 7 non peintes aux emplacements correspondant aux optiques du véhicule.

Ces emplacements 7 sont formés en partie supérieure de la face avant, sur un de ses bords 8 voisin du capot 1. Chaque emplacement est conformé en une cuvette à bords tronconiques 10 dont le fond 9 est fermé par un voile plat. La peinture est appliquée sur toute la face interne de la pièce, bords tronconiques 10 compris, mais ne recouvre pas les voiles qui forment les fonds 9 des cuvettes.

La face avant est donc opaque avec un effet nacré sur toute sa surface, sauf au fond des cuvettes des formes 7.

Ces fonds 9 de cuvettes abritent des optiques placés derrière la face avant et peuvent d'ailleurs servir de vitrage pour ces optiques.

Dans sa partie correspondant aux fonds 9, la peau présente une caractéristique particulière : elle est transparente alors qu'elle est seulement translucide dans ses autres parties.

Cette transparence résulte de l'état de surface poli glace de la région correspondante de l'empreinte dans laquelle elle a été formée et d'un amincissement local de la peau.

Dans l'exemple des figures 5 et 6, le bandeau 11 présente l'originalité supplémentaire de comporter des motifs en relief 12 sur sa face interne, sous la forme de nervures longitudinales.

On sait que les peintures de formes en relief sont particulièrement exposées à l'usure et aux frottements. Grâce à l'invention, la peinture est protégée des agressions extérieures, y compris lorsqu'elle couvre des formes en relief.

Les deux modes de réalisation décrits ci-dessus ne sont fournis qu'à titre d'exemples et pourront recevoir toute modification souhaitable sans sortir pour cela du cadre de l'invention.

## Revendications

1. Pièce de carrosserie (4, 5, 11) de véhicule automobile comportant une face extérieure dirigée vers l'extérieur du véhicule et une face intérieure opposée à la face extérieure, constituée par une peau réalisée en une matière laissant passer la lumière, recouverte au moins partiellement par un revêtement opaque sur sa face intérieure **caractérisée en ce que** le revêtement est un film électroluminescent.

2. Pièce de carrosserie selon la revendication 1, **caractérisée en ce que** la peau est transparente.

3. Pièce de carrosserie selon la revendication 1, **caractérisée en ce que** la peau est translucide.

4. Pièce de carrosserie selon l'une quelconque des revendications 1 à 3, **caractérisée en ce que** la matière plastique laissant passer la lumière est filtrante pour les ultraviolets.

5. Pièce de carrosserie selon l'une quelconque des revendications 1 à 4, **caractérisée en ce que** la matière plastique est un polypropylène.

6. Pièce de carrosserie (4) selon l'une quelconque des revendications 1 à 5, **caractérisée en ce que** la peau est constituée d'une matière translucide qui présente des zones transparentes (9) intégrées dans un ensemble translucide, cette peau étant obtenue par exemple par moulage dans une empreinte qui présente par endroits un état de surface poli glace.

7. Pièce de carrosserie (4) selon l'une quelconque des revendications 1 à 6, **caractérisée en ce que** la peau présente un amincissement local (9).

8. Pièce de carrosserie (5) selon l'une quelconque des revendications 1 à 7, **caractérisée en ce que** la peau comporte un grainage sur sa face externe.

9. Pièce de carrosserie selon l'une quelconque des revendications 1 à 8, **caractérisée en ce que** le film électroluminescent recouvre intégralement la face interne de la peau.

10. Pièce de carrosserie (4) selon l'une quelconque des revendications 1 à 8, **caractérisée en ce que** le film électroluminescent recouvre partiellement la face interne de la peau et laisse découvertes certaines zones (9) de ladite face interne.

11. Pièce de carrosserie selon l'une quelconque des revendications 1 à 10, **caractérisée en ce que** le revêtement est obtenu par dépôt de matière ou par surmoulage d'un insert.

12. Pièce de carrosserie selon l'une quelconque des revendications 1 à 10, dans laquelle le revêtement est soudé ou collé à la peau.

13. Bandeau (5) destiné à s'appliquer sur la face externe d'une autre pièce de carrosserie (4), **caractérisé en ce qu'**il est une pièce de carrosserie selon l'une quelconque des revendications 1 à 12.
